# FASCICULE DE BREVET EUROPEEN

(11) **EP 0 597 781 B1**
(45) Date de publication et mention de la délivrance du brevet: **29.01.1997**
(21) Numéro de dépôt: 93420446.2
(22) Date de dépôt: 09.11.1993
(51) Int. Cl.: B29C 47/14

(54) **Filière plate pour l'extrusion de film, feuille ou plaque en matière synthétique**
Breitschlitzdüse zur Film-, Folien- oder Plattenextrusion
Flat sheet die for the extrusion of plastic films, struts or panels

(30) Priorité: 10.11.1992 FR 9213796
(43) Date de publication de la demande: 18.05.1994
(73) Titulaire: LES PLASTIQUES DE LA DEOME, F-42220 Bourg Argental (FR)
(72) Inventeur: Bonnel, Pierre, F-42290 Sorbiers (FR)
(74) Mandataire: Perrier, Jean-Pierre

(56) Documents cités:
- FR-A- 2 351 776
- US-A- 2 628 386
- US-A- 2 813 301
- US-A- 2 897 541
- US-A- 3 000 054
- US-A- 3 085 289
- US-A- 3 133 313
- US-A- 3 191 228
- PATENT ABSTRACTS OF JAPAN vol. 13, no. 52 (M-794)(3400) 7 Février 1989 & JP-A-63 256 418 (TORAY IND INC) 24 Octobre 1988
- PATENT ABSTRACTS OF JAPAN vol. 6, no. 193 (M-160)(1071) 2 Octobre 1982 & JP-A-57 100 032 (SEKISUI KASEIHIN KOGYO K.K.) 22 Juin 1982

## Description

Pour réaliser des films, feuilles ou plaques en matière synthétique, il est connu d'utiliser soit l'extrusion-soufflage, soit l'extrusion par filière plate. Cette dernière technique remplace peu à peu la première car elle permet d'obtenir un meilleur fini de surface, des tolérances plus faibles, une plus grande transparence et un meilleur brillant, aussi bien pour les films monocouches que multicouches.

Dans la technique d'extrusion par filière plate, la matière synthétique fondue, provenant d'au moins une extrudeuse, est conduite par un canal au corps de filière où des canaux d'écoulement la répartissent sur la largeur de la fente d'extrusion et de manière que le débit de matière soit identique en tous points de cette fente. Le film, feuille ou plaque, sortant de la filière est immédiatement plaqué sur un cylindre de refroidissement qui assure sa solidification rapide.

Dans les filières plates actuelles, la fente d'extrusion est délimitée entre deux lèvres, dont au moins l'une est ménagée sur une barre rapportée et fixée contre le corps par des vis transversales. Bien que le nombre de ces vis soit le plus élevé possible pour résister à la pression d'extrusion, on notera que la pression maximale admissible dans l'extrudeuse est limitée, afin que l'effort s'exerçant sur les vis soit compatible avec leurs résistances à la rupture et au moins ne les déforment qu'élastiquement.

A cela, il faut ajouter que, quelle que soit la précision d'usinage du corps et de la barre, l'assemblage des deux éléments constituant les lèvres de la filière procure des variations de l'entrefer de la fente sur la largeur de celle-ci.

Ces variations dimensionnelles, résultant des tolérances de fabrication et des déformations dues à la pression régnant dans la filière, sont actuellement absorbées par les moyens mis en oeuvre pour ajuster cet entrefer en rapport avec la variation de l'épaisseur du film. En général, ces moyens sont constitués, d'une part, par l'une des lèvres de la filière plate, lèvre qui est agencée pour être flexible, c'est à dire pour pouvoir se déformer localement, dans un sens ou dans l'autre, et, d'autre part, par des vis de réglage ou des moyens équivalents qui, liés à l'extrémité de la lèvre, s'allongent ou se rétractent, soit par commande manuelle, soit, le plus souvent, par des moyens de commande automatique.

De plus en plus les moyens de commande des déformations de la lèvre flexible sont asservis à un ordinateur réagissant aux variations de signaux émis par un appareil mesurant en permanence l'épaisseur du film sortant de la filière plate et cela sur toute la largeur de ce film. Si de tels moyens permettent effectivement un ajustement permanent de l'entrefer de la filière plate et permettent d'obtenir un film d'épaisseur régulière, ils sont très onéreux et interviennent dans une proportion tellement élevée par rapport au coût total de l'installation que les producteurs de film ne peuvent acquérir que des installations procurant des débits horaires élevés, seules susceptibles d'amortir cet investissement complémentaire.

Il en résulte que l'on ne trouve pas actuellement sur le marché d'installation d'extrusion à filière plate pouvant équiper, pour un coût abordable, des lignes de production ayant un débit moyen ou faible.

On connaît par JP-A-63 256 418 une filière plate comportant, d'une part, un élément d'alimentation constitué par un corps monolithique obturé à ses extrémités par des panneaux amovibles, et dans lequel est ménagé un alésage longitudinal communiquant avec un canal d'alimentation en matière et servant de logement à une règle amovible délimitant avec lui un étage de répartition de la matière, et, d'autre part, un élément de distribution composé de deux traverses liées par des vis à l'élément d'alimentation et délimitant entre elles une fente de distribution.

Cette construction assure la répartition de la matière dans un corps indépendant du corps portant la filière et de ce fait réduit les efforts s'exerçant sur la filière proprement dite, mais n'apporte aucune solution au réglage des lèvres de cette filière.

La présente invention a pour but de remédier à cela en fournissant une filière plate du type précité, peu onéreuse à réaliser, facile à entretenir, pouvant fournir aussi bien des forts débits que des faibles débits et procurant un débit d'épaisseur régulière, sans recours à des moyens de contrôle et de réglage complexe et onéreux.

A cet effet, dans la filière plate selon l'invention, les deux traverses de l'élément de distribution ont des dimensions transversales leur permettant de ne pas se déformer dans les conditions de fonctionnement et enserrent entre elles deux entretoises extrêmes déterminant l'entrefer de la fente, ces deux traverses étant liées l'une à l'autre par des boulons transversaux, les traversant au niveau des entretoises et étant plaquées contre le corps de l'élément d'alimentation, en contact d'étanchéité et non de fixation par frottement, par les vis assurant leur liaison avec ce corps.

Il ressort de ce qui précède que la filière selon l'invention est composée de deux éléments massifs, pratiquement indéformables dans les conditions d'exploitation et délimitant une fente de sortie à profil constant, ne nécessitant aucun réglage en cours de fonctionnement.

Dans une forme d'exécution telle que décrite dans la revendication 2, l'étage de répartition de l'élément communique par une fente longitudinale de transition avec un second étage de répartition constitué par deux règles qui, amovibles et disposés dans une rainure débouchant du corps de cet élément, délimitent entre elle une fente débitant dans l'élément de distribution.

Cet agencement permet de corriger les défauts d'alimentation et de répartition dans l'élément d'alimentation, avant que la matière parvienne à l'élément de distribution. Ainsi, dans cet élément de distribution, le débit de matière est régulier et exerce des contraintes constantes qui n'influent pas sur les qualités du film en cours de réalisation.

En outre, grâce à sa forme massive et à la disposition des alésages pour les deux étages d'alimentation, ce corps peut résister, sans déformation, à des pressions plusieurs fois supérieures à celles des filières actuelles en deux parties, ayant tendance à s'écarter à la moindre surpression.

Quelle que soit sa forme de réalisation, cette filière ne nécessite en cours de fonctionnement aucun réglage de son entrefer, ce qui élimine ainsi tous les moyens de commande de la lèvre flexible, mais aussi tous les moyens intervenant sur ces moyens de commande, et en particulier l'ordinateur, c'est à dire permet de supprimer tous les moyens augmentant considérablement le coût de la filière pour compenser ses défauts de fabrication et ses défauts de structure.

D'autres caractéristiques et avantages ressortiront de la description qui suit en référence au dessin schématique annexé, représentant à titre d'exemple non limitatif, plusieurs formes d'exécution de cette filière plate.
Figure 1 est une vue de côté montrant, de manière schématique, les éléments essentiels d'une installation d'extrusion avec une filière plate,
Figure 2 est une vue partielle en perspective montrant, à échelle agrandie, une forme d'exécution de la filière plate selon l'invention,
Figure 3 est une vue de côté en coupe transversale montrant, à échelle agrandie, une forme d'exécution de la filière plate représentée à la figure 2,
Figures 4 et 5 sont des vues en perspective représentant une forme d'exécution, respectivement, du corps et de l'une des règles du premier étage de répartition de la filière de la figure 3,
Figure 6 est une vue en perspective montrant une autre forme d'exécution de la règle du premier étage de répartition de la filière,
Figures 7 à 9 sont des vues en coupe suivant VII-VII, VIII-VIII et IX-IX de figure 6,
Figures 10 et 11 sont des vues de côté, en coupe transversale, montrant deux autres formes d'exécution de l'élément d'alimentation,
Figure 12 est une vue en perspective montrant une autre forme d'exécution de la règle du premier étage de répartition,
Figure 13 est une vue en perspective montrant une forme d'exécution de l'élément de distribution,
Figures 14 et 15 sont des vues de côté en coupe transversale montrant deux autres formes d'exécution de cette filière.

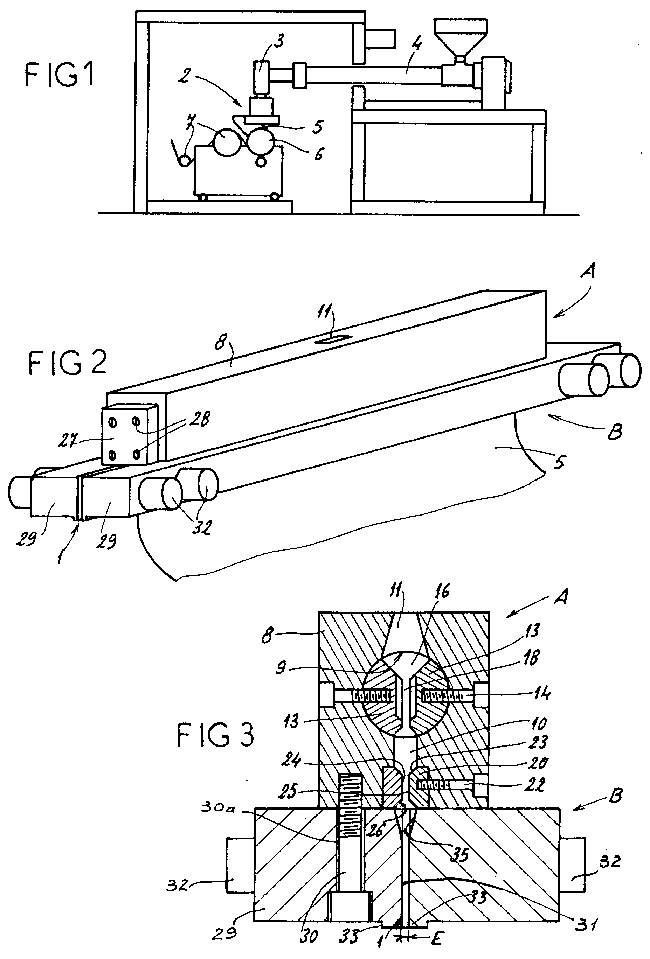

Comme montré à la figure 1, la filière plate selon l'invention, désignée par la référence 2, est fixée sur la tête 3 d'une extrudeuse 4 et débite, par sa fente 1, un film, une feuille ou une pellicule 5 en direction d'un tambour de refroidissement 6, à partir duquel elle est dirigée, par des rouleaux intermédiaires désignés de façon générale par 7, vers un poste d'embobinage, non représenté.

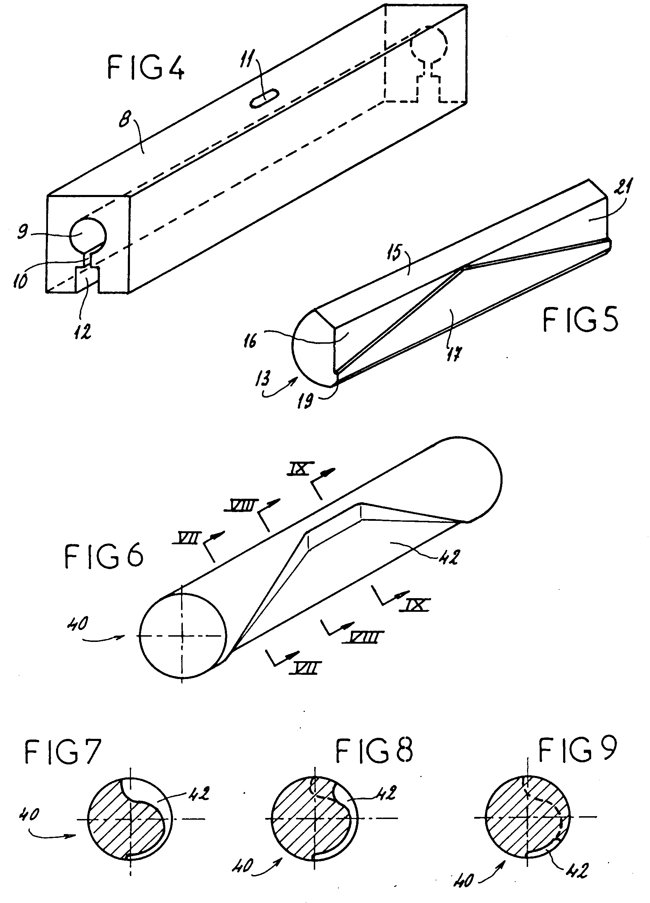

Selon l'invention, et comme montré plus en détails à la figure 2, la filière plate selon l'invention est composée d'un élément supérieur d'alimentation désigné de façon général par A et d'un élément inférieur de répartition B. L'élément d'alimentation A est constitué par un seul corps monolithique 8 qui, dans la forme d'exécution représentée aux figures 3 et 4, est traversé longitudinalement par un alésage cylindrique 9 communiquant, par une fente de transition 10, avec une rainure longitudinale 12 de section transversale rectangulaire. L'alésage 9 communique avec un canal d'alimentation centrale 11 ménagé dans le corps.

Les alésages 9 et la rainure 12 délimitent, respectivement, le premier et le second étage de répartition.

Dans la forme d'exécution représentée aux figures 3 à 5, le premier étage de répartition de la matière est composé d'une règle en deux éléments identiques 13a, 13b, de section sensiblement semi circulaire et dont le dos arrondi est plaqué, par des vis radiales 14, contre la face cylindrique de l'alésage 9 ménagé dans le corps. La partie de chaque élément de règle, qui est tournée en direction de l'autre règle, comporte d'amont en aval, d'une part, un chanfrein 15 délimitant un canal d'écoulement 16 communiquant avec le canal d'arrivée 11, d'autre part, deux fraisages symétriques 21 dont les fonds pentus forment un dièdre de répartition à partir du débouché du canal d'entrée 11, de plus, un méplat 17 délimitant une fente de passage 18, et enfin, un chanfrein 19 décomprimant la matière avant son introduction dans la fente 10 de transition et de décompression.

Le deuxième étage de répartition est composé de deux règles 20, ayant une section transversale de forme générale rectangulaire dont le dos est appliqué entre la face correspondante de la rainure 12 par des vis transversales 22 accessibles depuis l'extérieur du corps, comme celles 14 fixant les règles du premier étage de répartition. Chacune de ces règles 20 comporte, comme montré à la figure 3, d'une part et en amont, un chanfrein 23 formant un canal de compression, d'autre part, une face plane 24 délimitant avec la face en vis à vis de l'autre règle, une fente de passage 25 et, enfin, en aval, un chanfrein 26, formant un canal décomprimant la matière avant introduction de celle-ci dans l'étage de distribution. Comme le montre la figure 2, le corps d'alimentation A est obturé à chacune de ses extrémités par des panneaux 27 fixés par des vis transversales 28 se vissant dans le corps 8.

Il faut ici noter que, grâce à sa forme monolithique et massive, le corps 8 de l'élément d'alimentation est pratiquement indéformable aux pressions d'utilisation, puisque, à titre d'exemple, un corps ayant une section transversale carrée de 250 X 250 millimètres doit supporter une pression d'au moins 1000 bars pour commencer à se déformer au niveau de la fente 25. Cette déformation est d'ailleurs sans effet sur l'élément B de distribution de la filière, élément dont les traverses 29 sont liées au corps d'alimentation 8 par des vis 30 ayant uniquement une fonction de maintien en pression d'étanchéité et non de fixation par frottement. Les alésages 30a ménagées dans les traverses 29 tolèrent un jeu radial évitant que les vis 30 influent sur la position des traverses. Ainsi par exemple pour des vis 30 ayant un diamètre de 27 mm, les alésages 30a ont un diamètre de 29 mm.

Un autre avantage de cet agencement du corps 8 est qu'il permet, en démontant uniquement l'un des panneaux amovibles 27, d'accéder immédiatement aux deux étages de répartition pour en retirer les règles, par exemple, pour ajuster leurs dimensions, par retouches successives, de manière à obtenir, pour une matière synthétique déterminée, un débit constant sur toute la largeur de la fente de distribution.

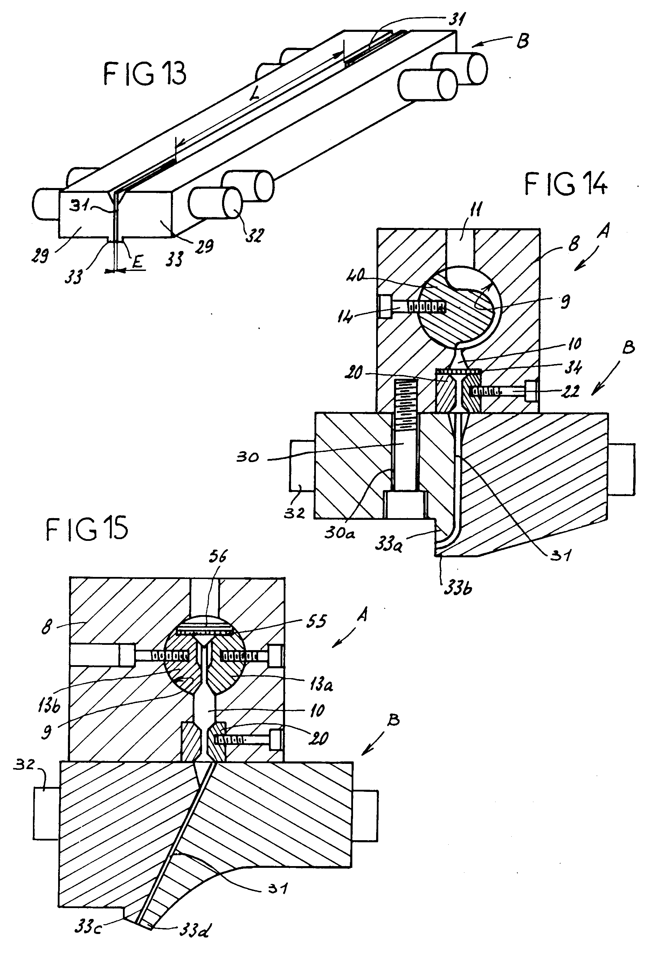

L'étage de distribution B, représenté à la figure 13, est constitué, comme décrit précédemment, par deux traverses 29 réalisées dans des barres massives en acier dur stabilisé, usinées, mises en condition de serrage, chauffées jusqu'à 350° C un grand nombre de fois avant d'être rectifiées. Après avoir reçu un traitement anti corrosion, tel que chromage dur ou nickelage chimique, chaque règle est polie et glacée. Elles sont liées l'une à l'autre en enserrant deux entretoises extrêmes 31 déterminant leur entrefer E, visible figures 3 et 13. Cette liaison est assurée exclusivement par des boulons 32 traversant leurs zones extrêmes comportant les entretoises 31.

Les dimensions de ces traverses sont déterminées de manière qu'aucune déformation mécanique consécutive à la pression de la matière ou à la température de cette matière ne puisse modifier la valeur de l'entrefer E. A titre d'exemple, pour une largeur de passage L de deux mètres, chacune des traverses a une section de 140 X 140 millimètres. Leur serrage est effectué par quatre goujons ayant un diamètre de 50 millimètres. Avec cette construction, aucune déformation ne peut se produire avant que la pression dans l'entrefer E atteigne une valeur supérieure à 450 ou 500 bars, c'est à dire à des valeurs de pression bien supérieure à celles mise en oeuvre pour l'extrusion des matières synthétiques.

A leur partie inférieure, les traverses 29 sont aménagées pour former deux lèvres 33 qui, comme montré à la figure 3, peuvent être parallèles à la fente de distribution 11, recourbées à leurs extrémités, comme montré pour les lèvres 33a et 33b à la figure 14, ou inclinées par rapport à la trajectoire de la matière dans le corps de l'alimentation, comme montré pour les lèvres 33c et 33d à la figure 15.

L'élément de distribution, composé par les deux traverses 29 assemblées entre elles, forme un sous-ensemble de la filière qui est facilement interchangeable pour adaptation aux besoins. L'interchangeabilité s'effectue en démontant uniquement les vis 30 assurant le contact étanche de l'élément de distribution B contre l'élément A d'alimentation.

Pour modifier la valeur de l'entrefer E, c'est à dire la largeur de la fente 1, il suffit de remplacer les entretoises initiales 31 par d'autres entretoises plus grandes ou plus petites. Ces différentes entretoises sont composées par des plaques métalliques rectifiées et possédant des épaisseurs très précises.

Comme montré figure 3, chacune des deux traverses 29 comporte, en amont de sa face plane délimitant la fente 1, un chanfrein 35 formant, en aval, du deuxième étage de répartition du corps d'alimentation, un canal de compression et de guidage de la matière en direction de la fente de sortie.

Le premier étage de répartition dans le corps d'alimentation A qui, dans la forme d'exécution précédente comportait une règle en deux éléments, peut aussi comporter une unique règle cylindrique assurant la répartition de matière. Dans la forme d'exécution représentée à la figure 6, la règle 40, ayant au moins à ses extrémités, une section transversale identique, au jeu près, à celle de l'alésage longitudinal 9, comporte, sur la moitié de sa périphérie, un usinage de répartition présentant, en allant depuis le débouché du canal d'alimentation 11 jusqu'à la fente de transition 10, une profondeur décroissante et une largeur croissante, comme le montrent bien les sections des figures 7 à 9. Lorsque cette règle est fixée dans l'alésage 9 du corps 8 par des vis radiales, accessibles depuis l'extérieur, la matière pénétrant par le canal 11 et venant dans l'alésage 9, se répartit longitudinalement dans l'usinage 42, de manière à fournir, dans la fente de transition 10, un débit de matière régulier sur toute la longueur utile à cette fente.

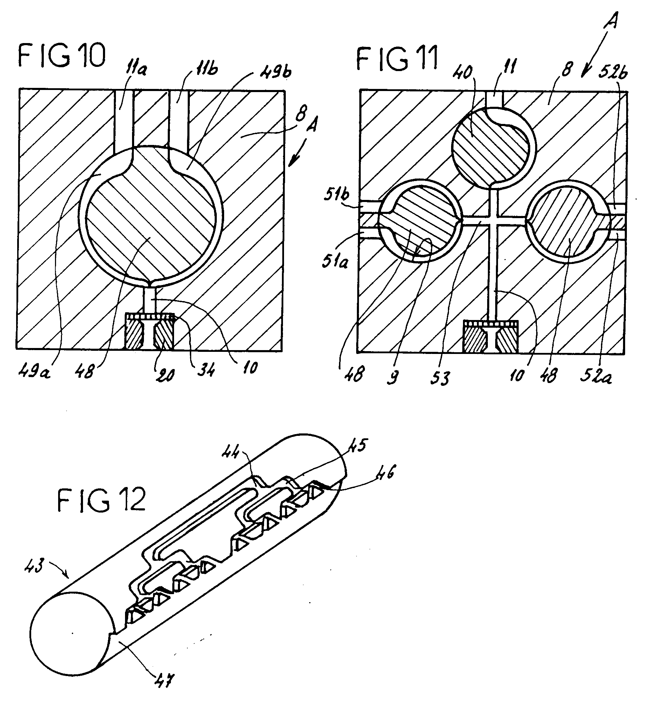

La figure 12 montre une règle 43 permettant d'obtenir la même répartition au moyen d'une succession de canaux 44-45-46 se dédoublant en allant sur l'aval. Bien entendu, les canaux 46 communiquent dans un fraisage commun 47 assurant la répartition et le guidage de la matière jusqu'à la fente de transition et de décompression 10.

La figure 10 montre qu'une même règle cylindrique 48 peut comporter, sur les deux côtés, des usinages de répartition 49 du type montré à la figure 6 ou du type montré à la figure 12. Chacun de ces usinages est alimenté par un canal d'entrée 11a et 11b, lui-même alimenté par une extrudeuse ou par deux extrudeuses différentes, fournissant un même débit de matière, ou des déchets différents. Dans cette forme d'exécution, les deux canaux 49a-49b communiquent avec la même fente de transition 10, disposée en amont du deuxième étage de répartition.

Dans cette forme d'exécution, la règle de répartition 48 est liée au corps 8 par des vis de fixation accessibles depuis l'extérieur coopérant avec chacune de ses extrémités.

La forme d'exécution représentée à la figure 11 montre qu'il est aussi possible, dans un même corps 8, de diviser le premier étage de répartition en plusieurs zones alimentées chacune par une ou plusieurs matières. Les deux règles 48, du type décrite figure 10, assure chacune la répartition de deux matières différentes leur parvenant par des orifices d'entrée 51a-51b, 52a-52b, tandis que la règle 40 n'assure la répartition que d'un seul type de matière qui lui est amenée par le canal d'entrée 11. Les différentes règles sont disposées dans des alésages 9 différents, communiquant chacun avec une fente 53 de transition primaire, communiquant elle-même avec la fente de transition 10 amenant la matière au deuxième étage de répartition.

Les formes d'exécution qui viennent d'être décrites en référence aux figures 10 à 11 permettent d'obtenir des films comportant, respectivement, deux couches et cinq couches, tout en bénéficiant des avantages inhérents à la filière plate selon l'invention.

Pour faciliter le mariage des matières avant d'aborder le deuxième étage de répartition, une grille 34 est interposée entre la fente de transition 10 et le deuxième étage de répartition. Celle grille est, par exemple, composée d'une tôle rectifiée, chromée, perforée à 60 % par des alésages transversaux ayant un diamètre de l'ordre de 3 millimètres.

Cet agencement favorise le mélange des couches formées en amont et permet, entre autres, de lier entre elles deux couches de matière thermoplastique qui, habituellement, se délaminent. Avec celle grille de mélange, il est ainsi possible de réaliser un film complexe composé de trois couches de matières différentes ayant une excellente cohésion entre elles, alors que, suivant le procédé traditionnel, il aurait fallu rajouter deux couches supplémentaires pour assurer la liaison entre ces couches de matière.

Il est évident que la filière plate selon l'invention peut, selon les matières synthétiques devant être débitées, présenter diverses configurations, dont certaines sont représentées aux figures 14 et 15.

Dans la forme d'exécution représentée à la figure 15, l'élément d'alimentation A comporte, en plus et en amont du premier étage de répartition du corps d'alimentation 8, une grille 55 qui, formant porte-filtre, supporte au moins un et de préférence deux filtres 56.

La grille 55 est réalisée dans une tôle métallique ayant une épaisseur de l'ordre de 3 millimètres, et dans laquelle sont ménagées, sur 60 % de sa face formant surface filtrante, des perforations transversales ayant un diamètre de l'ordre de 3 millimètres.

Dans la forme d'exécution représentée à la figure 15, la grille 55 est disposée dans un logement aménagé dans les deux éléments de règle 13a-13b, mais il est évident qu'elle peut aussi être disposée en amont de l'alésage 9, c'est à dire dans un logement ménagé dans le corps 8 et non dans les règles.

Ce montage présente de nombreux avantages par rapport à la solution traditionnelle, à laquelle il se substitue et consistant à disposer le filtre en sortie d'extrudeuse. En effet, pour une même perte de charge sur le circuit de matière synthétique, la disposition des filtres à proximité immédiate de la première zone de répartition de la matière permet d'augmenter la surface de filtration, et de recueillir tous les déchets de matière et autres produits de carbonisation qui, normalement, s'accumulent dans les zones de changement de direction entre l'extrudeuse et la fente de sortie.

Les filtres 56 peuvent être identiques ou être de passages différents. L'ensemble grille 55 et filtres 56 repose librement sur les éléments 13a, 13b de la règle et est emprisonné entre les panneaux extrêmes 27 du corps 8 de l'élément d'alimentation. Pour changer les filtres, il suffit, la machine étant en arrêt, de retirer l'un des panneaux 27 et de remplacer la grille 55 portant les filtres usagés par une autre grille 55 portant des filtres propres. Cette opération ne dure que quelques minutes et s'effectue très aisément.

Des essais réalisés sur une filière en fonctionnement ont montré que la qualité de filtration était bonne, puisqu'à une pression différentielle de 90 bars entre la pression amont et la pression aval, la grille porte-filtre *55* ne subissait aucune déformation.

Il ressort de la description qui précède que la filière plate selon l'invention, non seulement est plus simple à réaliser et moins onéreuse que les filières traditionnelles, mais permet aussi, en résistant mieux aux efforts d'extrusion, de travailler des matières ayant un grade plus bas, ou de travailler à une température d'extrusion plus basse, en réduisant l'oxydation de la matière synthétique, mais aussi le dégagement de fumée en sortie de filière.

## Revendications

1. Filière pour l'extrusion de film, feuille ou plaque en matière synthétique, comportant, d'une part, un élément d'alimentation (A) constitué par un corps monolithique (8) obturé à ses extrémités par des panneaux amovibles, et dans lequel est ménagé un alésage longitudinal (9) communiquant avec un canal (11) d'alimentation en matière et servant de logement à une règle amovible (40, 13) délimitant avec lui un étage de répartition de la matière, et, d'autre part, un élément de distribution (B) composé de deux traverses (29) liées par des vis (30) à l'élément d'alimentation (A) et délimitant entre elles une fente de distribution (1), caractérisée en ce que les deux traverses (29) de l'élément de distribution (B) ont des dimensions transversales leur permettant de ne pas se déformer dans les conditions de fonctionnement et enserrent entre elles deux entretoises extrêmes (31) déterminant l'entrefer de la fente (1), ces deux traverses (29) étant liées l'une à l'autre par des boulons transversaux (32), les traversant au niveau des entretoises (31) et étant plaquées contre le corps (8) de l'élément d'alimentation (A), en contact d'étanchéité et non de fixation par frottement, par les vis (30) assurant leur liaison avec ce corps (8).

2. Filière pour l'extrusion de film, feuille ou plaque en matière synthétique, comportant, d'une part, un élément d'alimentation (A) constitué par un corps monolithique (8) obturé à ses extrémités par des panneaux amovibles, et dans lequel est ménagé un alésage longitudinal (9) communiquant avec un canal (11) d'alimentation en matière et servant de logement à une règle amovible (40, 13) délimitant avec lui un étage de répartition de la matière, et, d'autre part, un élément de distribution (B) composé de deux traverses (29) liées par des vis (30) à l'élément d'alimentation (A) et délimitant entre elles une fente de distribution (1), caractérisée
en ce que les deux traverses (29) de l'élément de distribution (B) ont des dimensions transversales leur permettant de ne pas se déformer dans les conditions de fonctionnement et enserrent entre elles deux entretoises extrêmes (31) déterminant l'entrefer de la fente (1), ces deux traverses (29) étant liées l'une à l'autre par des boulons transversaux (32), les traversant au niveau des entretoises (31) et étant plaquées contre le corps (8) de l'élément d'alimentation (A), en contact d'étanchéité et non de fixation par frottement, par les vis (30) assurant leur liaison avec ce corps (8) et en ce que la règle (13) de l'étage de répartition de la matière dans l'élément d'alimentation (A) est composée de deux éléments identiques (13a, 13b) de section sensiblement circulaire, dont le dos est plaqué, par des vis radiales (14), contre la face cylindrique de l'alésage (9) ménagé longitudinalement dans le corps (8), et dont la partie, tournée en direction de l'autre élément, forme, avec cette autre règle, une fente de passage (18) comportant également, dans le sens d'écoulement de la matière, d'une part, un chanfrein longitudinal (15) formant, avec la paroi de l'alésage, un canal de transition entre le canal d'alimentation (11) et la fente (18), et, d'autre part, débouchant de la face de la règle délimitant la fente de passage (18), deux fraisages symétriques (21), dont les fonds pentus forment un dièdre de répartition à partir du débouché du canal d'alimentation (11) en matière synthétique.

3. Filière plate selon l'une quelconque des revendications 1 et 2, caractérisée en ce que l'étage de répartition de l'élément (A) communique par une fente longitudinale de transition (10) avec un second étage de répartition constitué par deux règles (20) qui, amovibles et disposés dans une rainure (12) débouchant du corps (8) de cet élément (A), délimitent entre elle une fente (25) débitant dans l'élément de distribution (B).

4. Filière plate selon la revendication 3, caractérisée en ce que chacune des deux règles (20) du second étage de répartition de l'élément d'alimentation (A) est fixée par des vis transversales (22) dans la rainure (12) du corps d'alimentation, présente, en section transversale, une forme générale rectangulaire, et comporte, en vis à vis de l'autre règle, un chanfrein amont (23) et un chanfrein aval (26), formant respectivement zone de compression et zone de décompression de part et d'autre de la fente de répartition (25).

5. Filière plate selon l'une quelconque des revendications 1 à 4, caractérisée en ce que les deux règles (20) du deuxième étage de répartition sont précédées, dans le sens d'écoulement de la matière, par une plaque perforée (54) formant grille de mariage des matières.

6. Filière plate selon l'une quelconque des revendications 1 à 5, caractérisée en ce que l'élément d'alimentation (A) comporte, en amont du premier étage de répartition, une grille porte-filtre (55) supportant au moins un filtre interchangeable (56), se substituant au filtre prévu en sortie d'extrudeuse.

## Claims

1. A die for the extrusion of film, sheet or plate of synthetic material, comprising, on the one hand, a supply element (A) constituted by a monolithic body (8) closed at its ends by removable panels, and in which is formed a longitudinal bore (9) communicating with a material supply passage (11) and serving to house a detachable measuring element (40, 13) delimiting with it a material distribution stage, and on the other hand, a distribution element (B) composed of two cross members (29) connected by screws (30) to the supply element (A) and delimiting between them a distribution slot (1), characterised in that the two cross members (29) of the distribution element (B) have transverse dimensions such that they are not permitted to deform under operating conditions and enclose between them two end walls (31) determining the gap width of the slot (1), these two cross members (29) being connected together by transverse bolts (32) extending through them in the region of the walls (31) and being held closely against the body (8) of the supply element (A), in sealing but not fixed rubbing contact, by the screws (30) effecting their connection with the body (8).

2. A die for the extrusion of film, sheet or plate of synthetic material, comprising, on the one hand, a supply element (A) constituted by a monolithic body (8) closed at its ends by removable panels, and in which is formed a longitudinal bore (9) communicating with a material supply passage (11) and serving to house a detachable measuring element (40, 13) delimiting with it a material distribution stage, and, on the other hand, a distribution element (B) composed of two cross members (29) connected by screws (30) to the supply element (A) and delimiting between them a distribution slot (1), characterised in that the two cross members (29) of the distribution element (B) have transverse dimensions such that they are not permitted to deform under operating conditions and enclose between them two end walls (31) determining the gap width of the slot (1), these two cross members (29) being connected together by transverse bolts (32) extending through them in the region of the walls (31) and being held closely against the body (8) of the supply element (A) in sealing but not fixed rubbing contact, by the screws (30) effecting their connection with the body (8), and in that the measuring element (13) of the material distribution stage in the supply element (A) is composed of two identical elements (13a, 13b) of substantially circular section, of which the rear surfaces are held, by radial screws (14), closely against the cylindrical face of the bore (9) formed longitudinally in the body (8), and of which the parts facing in the direction of the other element form, with this other measuring element, a passage slot (18) also having, in the direction of material flow, on the one hand, a longitudinal chamfer (15) forming, with the bore wall, a transitional channel between the supply channel (11) and the slot (18) and, on the other hand, opening from the face of the measuring element delimiting the passage slot (18), two symmetrical milled portions (21) of which the inclined bases form a distributing dihedron from the opening of the synthetic material supply passage (11).

3. A flat die according to either of Claims 1 and 2, characterised in that the distribution stage of the element (A) communicates by a transitional longitudinal slot (10) with a second distribution stage constituted by two measuring elements (20) which, being detachable and disposed within a groove (12) opening from the body (8) of this element (A), delimit between them a slot (25) discharging into the distribution element (B).

4. A flat die according to Claim 3, characterised in that each of the two measuring elements (20) of the second distribution stage of the supply element (A) is fixed by transverse screws (22) in the groove (12) of the supply body, has, in transverse section, a generally rectangular shape and includes, in opposition to the other measuring element, an upstream chamfer (23) and a downstream chamfer (26), forming respectively compression and decompression zones to either side of the distribution slot (25).

5. A flat die according to any one of Claims 1 to 4, characterised in that the two measuring elements (20) of the second distribution stage are preceded, in the direction of material flow, by a perforated plate (54) forming a filter grill for the material.

6. A flat die according to any one of Claims 1 to 5, characterised in that the supply element (A) includes, upstream of the first distribution stage, a filter-carrying grill (55) supporting at least one interchangeable filter (56), being substituted for the filter provided at the exit of the extruder.

## Patentansprüche

1. Düse zur Extrusion von Filmen, Folien oder Platten aus synthetischem Material, umfassend einerseits ein Versorgungselement (A), welches aus einem monolithischen Körper (8) gebildet ist, der an seinen Enden durch abnehmbare Deckel verschlossen ist und in welchem eine Längsbohrung (9) vorgesehen ist, welche mit einem Kanal (11) zur Versorgung mit Material verbunden ist und als Aufnahme für eine abnehmbare Schiene (40, 13) dient, welche mit ihr eine Materialaufteilungsstufe begrenzt und andererseits ein Verteilungselement (B), welches von zwei Traversen (29) gebildet ist, die durch Schrauben (30) mit dem Versorgungselement (A) verbunden sind und zwischen ihnen einen Verteilungsschlitz (1) begrenzen, dadurch gekennzeichnet, daß die zwei Traversen (29) des Verteilungselements (B) Querabmessungen aufweisen, die es ihnen erlauben, daß sie sich bei den Betriebsbedingungen nicht verformen und zwischen ihnen zwei Endverstrebungen (31) einspannen, welche den Spalt des Schlitzes (1) bestimmen, wobei diese zwei Traversen (29) miteinander durch Querbolzen (32) verbunden sind, welche sie im Bereich der Verstrebungen (31) durchsetzen und gegen den Körper (8) des Versorgungselements (A) in Dichtkontakt und nicht durch Reibungsbefestigung durch die Schrauben (30) gedrückt werden, welche ihre Verbindung mit diesem Körper (8) gewährleisten.

2. Düse zur Extrusion von Filmen, Folien oder Platten aus synthetischem Material, umfassend einerseits ein Versorgungselement (A), welches aus einem monolithischen Körper (8) gebildet ist, der an seinen Enden durch abnehmbare Deckel verschlossen ist, und in welchem eine Längsbohrung (9) vorgesehen ist, welche mit einem Kanal (11) zur Versorgung mit Material verbunden ist und als Aufnahme für eine abnehmbare Schiene (40, 13) dient, welche mit ihr eine Materialaufteilungsstufe begrenzt, und andererseits ein Verteilungselement (B), welches von zwei Traversen (29) gebildet ist, die durch Schrauben (30) mit dem Versorgungselement (A) verbunden sind und zwischen ihnen einen Verteilungsschlitz (1) begrenzen, dadurch gekennzeichnet, daß die zwei Traversen (29) des Verteilungselements (B) Querabmessungen aufweisen, die es ihnen erlauben, daß sie sich bei den Betriebsbedingungen nicht verformen und zwischen ihnen zwei Endverstrebungen (31) einspannen, welche den Spalt des Schlitzes (1) bestimmen, wobei diese zwei Traversen (29) miteinander durch Querbolzen (32) verbunden sind, welche sie im Bereich der Verstrebungen (31) durchsetzen und gegen den Körper (8) des Versorgungselements (A) in Dichtkontakt und nicht durch Reibungsbefestigung durch die Schrauben (30) gedrückt werden, welche ihre Verbindung mit diesem Körper (8) gewährleisten, und dadurch, daß die Schiene (13) der Materialaufteilungsstufe im Versorgungselement (A) von zwei identischen Elementen (13a, 13b) von im wesentlichen kreisförmigem Querschnitt gebildet ist, deren Rücken mittels Radialschrauben (14) gegen die zylindrische Fläche der Bohrung (9) gedrückt ist, welche longitudinal im Körper (8) vorgesehen ist, und deren in Richtung des anderen Elements gewandter Teil mit dieser anderen Schiene einen Durchgangsschlitz (18) bildet, welcher gleichfalls in der Strömungsrichtung des Materials zum einen eine Längsfase (15) umfaßt, welche mit der Wandung der Bohrung einen Übergangskanal zwischen dem Versorgungskanal (11) und dem Schlitz (18) bildet und zum anderen ausgehend von der Seite der Schiene, welche den Übergangsschlitz (18) begrenzt, zwei symmetrische Fräsungen (21) umfaßt, deren abfallende Böden ausgehend vom Ausgang des Versorgungskanals (11) für das synthetische Material einen Dieder zur Aufteilung bilden.

3. Breitschlitzdüse nach einem der Ansprüche 1 und 2, dadurch gekennzeichnet, daß die Aufteilungsstufe des Elements (A) durch einen Längsübergangsschlitz (10) mit einer zweiten Aufteilungsstufe verbunden ist, welche durch zwei Schienen (20) gebildet ist, die - abnehmbar und in einer Ausgangsrinne (12) des Körpers (8) dieses Elements (A) angeordnet - zwischen ihnen einen Schlitz (25) begrenzen, welcher in das Verteilungselement (B) einbringt.

4. Breitschlitzdüse nach Anspruch 3, dadurch gekennzeichnet, daß jede der zwei Schienen (20) der zweiten Aufteilungsstufe des Versorgungselements (A) mittels Querschrauben (22) in der Rinne (12) des Versorgungskörpers befestigt ist, eine im Querschnitt allgemein rechteckige Form aufweist und gegenüber der anderen Schiene eine stromaufwärtige Fase (23) und eine stromabwärtige Fase (26) umfaßt, welche auf beiden Seiten des Aufteilungsschlitzes (25) eine Kompressionszone bzw. eine Dekompressionszone bilden.

5. Breitschlitzdüse nach einem der Ansprüche 1 bis 4, dadurch gekennzeichnet, daß den zwei Schienen (20) der zweiten Aufteilungsstufe in Richtung der Materialströmung eine perforierte Platte (54) vorausgeht, welche ein Materialvereinigungsgitter bildet.

6. Breitschlitzdüse nach einem der Ansprüche 1 bis 5, dadurch gekennzeichnet, daß das Versorgungselement (A) stromaufwärts der ersten Aufteilungsstufe einen Gitter-Filterhalter (55) umfaßt, welcher wenigstens einen austauschbaren Filter (56) trägt, der an die Stelle des am Ausgang des Extruders vorgesehenen Filters tritt.
